**Europäisches Patentamt**

**European Patent Office**

**Office européen des brevets**

(11) Veröffentlichungsnummer: **0 149 482**

**A2**

(12) **EUROPÄISCHE PATENTANMELDUNG**

(21) Anmeldenummer: **85100248.5**

(22) Anmeldetag: **12.01.85**

(51) Int. Cl.⁴: **A 47 B 96/14**
**F 16 B 12/30**

(30) Priorität: **14.01.84 DE 8400999 U**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Granitzki, Peter**
**August-Schuckenbäumer-Strasse 11**
**D-4902 Bad Salzuflen 5(DE)**

(72) Erfinder: **Granitzki, Peter**
**August-Schuckenbäumer-Strasse 11**
**D-4902 Bad Salzuflen 5(DE)**

(74) Vertreter: **Nickels, Heinz**
**Patentanwälte Dr.-Ing. Heinz Nickels Dipl.-Phys. Lorenz**
**Hanewinkel Detmolder Strasse 26 Postfach 6207**
**D-4800 Bielefeld 1(DE)**

(54) **Ablage- und Ausstellungsmöbel, insbesondere Regal.**

(57) Das Ablage- und Ausstellungsmöbel, insbesondere, Regal, hat mehrere im Abstand zueinander, vorzugsweise übereinander gehaltenen Aufnahmeflächen bildenden Platten (1), von denen jeweils zwei benachbarte Platten (1) durch mehrere Verbindungsbeschläge gegeneinander lagefixiert sind. Jeder Verbindungsbeschlag weist ein zwischen den benachbarten Platten (1) angeordnetes Abstandshalterohr (2) mit mindestens einer darin eingesetzten mutterartigen Gewindebuchse (3), einen in die Gewindebuchse (3) in Längsrichtung des Abstandshalterohres (2) eingeschraubten, an der einschraubseitigen Stirnfläche (4) des Abstandshalterohres (2) zugänglichen, im Abstandshalterohr (2) endenden oder aus diesem herausragenden Gewindebolzen (5) und ein auf den Gewindebolzen (5) aufgeschraubtes die Platte (1) zwischen sich und der Abstandshalterohr-Stirnfläche (4) verspannendes, von einem zweiten Abstandshalterohr (2) oder einer Kragenbuchse gebildetes Widerlager auf.

Dieser Verbindungsbeschlag besteht in vorteilhafter Weise aus wenigen Einzelteilen, ermöglicht eine variable Plattenverbindung ohne Werkzeuge (also von Hand) und ergibt eine sehr hohe Verbindungsfertigkeit und somit Stabilität.

Fig.3

" Ablage- und Ausstellungsmöbel, insbesondere Regal"

Die Erfindung bezweckt die Schaffung eines nach dem Oberbegriff des Patentanspruches 1 aufgebauten Ablage- und/oder Ausstellungsmöbels, insbesondere Regal, dessen übereinander angeordnete Platten als Ablageflächen durch einfach aufgebaute, werkzeuglos zu betätigende und aus wenigen Einzelteilen bestehende Verbindungsbeschläge sicher und mit hoher Verbindungsfestigkeit im Abstand zueinander gehalten und miteinander beschädigungsfrei verbunden sein sollen.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf deren Kombination.

Das erfindungsgemäße Ablage- und/oder Ausstellungsmöbel, insbesondere Regal, ist durch einfach und kostensparend aufgebaute und herstellbare Verbindungsbeschläge in einfacher, sicherer und werkzeugloser Weise zusammensetzbar und jederzeit in seinem Aufbau veränderbar, das heißt, erweiterbar oder verringerbar.

Die Verbindungsbeschläge bestehen aus wenigen Einzelteilen und lassen sich für die Montage ohne Werkzeuge leicht von Hand mit den Platten verbinden.

Besonders vorteilhaft ist dabei die dickwandige Ausbildung der Abstandshalterohre der Verbindungsbeschläge, die durch ihre Ausbildung einerseits von Hand leicht verdreht werden können und zum anderen eine verhältnismäßig große Verbindungsfläche mit den Platten eingehen, wodurch eine sehr hohe Verbindungsstabilität zwischen Abstandshalterohren und Platten erzielt wird. Zwischen jeder Platte erfolgt durch die Verbindungsbeschläge eine verspannte Plattenbefestigung, so daß dadurch das gesamte Regal eine hohe Stabilität erhält und zwar nach allen Richtungen hin. Durch diese Verbindungsbeschläge ist ein variabler Regalaufbau möglich.

Weiterhin treten die Verbindungsbeschläge lediglich durch ihre Abstandshalterohre und oben und untenseitig am Regal durch die abschließenden Kragenbuchsen in Erscheinung, was sich auf den ästhetischen Eindruck des gesamten Regales günstig auswirkt und diesem einen formschönen Gesamteindruck verleiht.

Die Platten und Verbindungsbeschläge ergeben zusammen einen Bausatz, mit dem von jedem Laien ein Regal in der verschiedensten Aufbauart bequem zusammensetzbar ist.

Auch lassen sich durch die Platten und Verbindungsbeschläge stand- oder fahrbare Tische, Boarde, Teewagen oder dergleichen zusammensetzen.

Anhand der Zeichnungen wird nachfolgend ein Ausführungsbeispiel gemäß der Erfindung näher erläutert. Es zeigt:

Fig. 1　　　eine Seitenansicht in Explosionsdarstellung eines Verbindungsbeschlages für Ablage- und Ausstellungsmöbel, insbesondere Regale,

Fig. 2　　　eine Vorderansicht im Schnitt durch den Verbindungsbereich zwischen Verbindungsbeschlag und der obersten Regalwandung,

Fig. 3　　　eine Vorderansicht im Schnitt durch den mittleren, eine Regalwandung zwischen zwei übereinander angeordnete Verbindungsbeschläge verspannt haltenden Verbindungsbereich,

Fig. 4　　　eine Vorderansicht im Schnitt durch den Verbindungsbereich zwischen Verbindungsbeschlag und der untersten Regalwandung,

Fig. 5 bis 8　　　schematische Vorderansicht von Regalen in variabler durch Verbindungsbeschläge miteinander verbundener Regalwandungs-anordnung.

Ein erfindungsgemäßes Ablage- und/oder Ausstellungsmöbel, insbesondere Regal, weist mehrere übereinander angeordnete, im Abstand zueinander gehaltene und miteinander verbundene waagerechte Platten (Wandungen) 1 auf, welche die Aufnahmeflächen für das Abstellen der verschiedensten Gegenstände bilden.

Jeweils zwei benachbarte, das heißt, zwei übereinander angeordnete Platten 1 sind erfindungsgemäß durch mehrere Verbindungsbeschläge gegeneinander lagefixiert und miteinander lösbar verbunden.

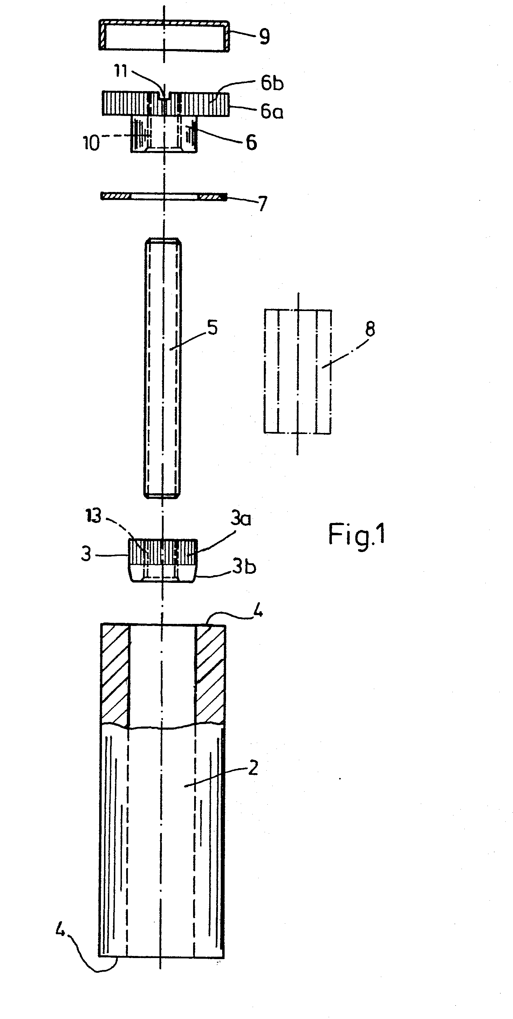

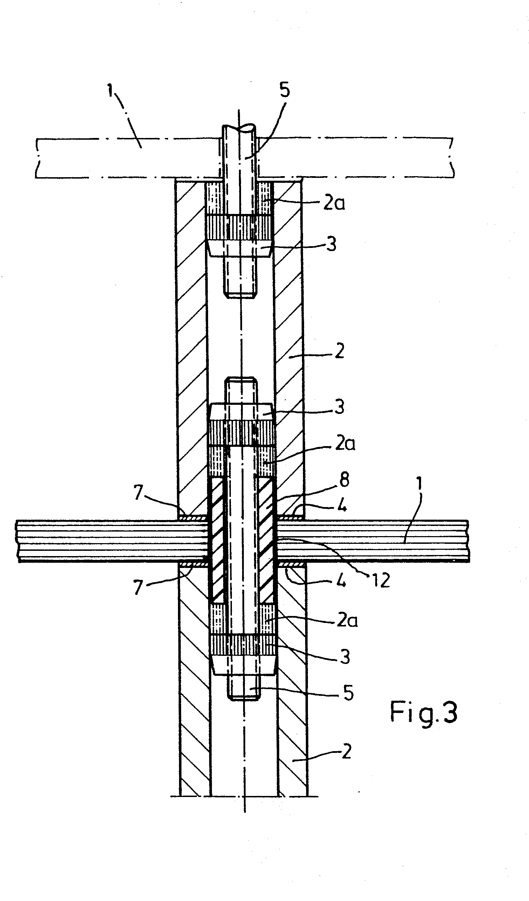

Jeder Verbindungsbeschlag, der in Fig. 1 in seinen Einzelteilen im unverbundenen Zustand dargestellt ist, stellt einen Bausatz dar und weist ein zwischen den benachbarten Platten 1 angeordnetes Abstandshalterohr 2 mit mindestens einer darin eingesetzten, mutterartigen Gewindebuchse 3, einen in die Gewindebuchse 3 in Längsrichtung des Abstandshalterohres 2 eingeschraubten, aus der Stirnfläche 4 (dem Längenende) des Abstandshalterohres 2 herausragenden und die an der Abstandshalterohr-Stirnfläche 4 anliegende Platte 1 durchfassenden Gewindebolzen 5 und ein auf den Gewindebolzen 5 aufgeschraubtes, die Platte 1 zwischen sich und der Abstandshalterohr-Stirnfläche 4 verspannendes, von einem zweiten Abstandshalterohr 1 (Fig. 3) oder einer Kragenbuchse 6 (Fig. 1,2 und 4) gebildetes Widerlager auf.

Weiterhin gehören zu dem Verbindungsbeschlag für jede Platte 1 zwei Zwischenscheiben 7 aus elastischem und/oder flexiblen Werkstoff, wie Kunststoff, Gummi oder dergleichen, eine Führungsbuchse 8, die im mittleren Verbindungsbereich gemäß Fig. 3 eingesetzt wird, und eine Abdeckkappe 9.

Das Abstandshalterohr 2 hat einen kreisförmigen Querschnitt und ist in bevorzugter Weise dickwandig ausgebildet, so daß die Stirnflächen 4 dieses Abstandshalterohres 2 große Anlageflächen bilden; das Abstandshalterohr 1 besteht in bevorzugter Weise aus Aluminium. Die Länge des Abstandshalterohres 2 bestimmt den Abstand der beiden übereinander angeordneten Platten 1 und je nach gewünschten Plattenabstand wird die Länge des Abstandshalterohres 2 gewählt; die Abstandshalterohre 2 lassen sich in gewissen Längen herstellen, so daß eine Anzahl an unterschiedlich langen Rohren 2 zur Auswahl zur Verfügung steht.

Mindestens von einem, vorzugsweise von beiden Längenenden her ist in das Abstandshalterohr 2 je eine mutterartige Gewindebuchse 3 eingepreßt und in dem Abstandshalterohr 2 mit Abstand zur Stirnfläche 4 angeordnet, das heißt, gegenüber der Stirnfläche 4 zurückversetzt in dem Rohr 2 festgelegt.

Um eine sichere Verbindung und einen hohen Press-Sitz der Gewindebuchse 3 zu erreichen, ist diese mantelseitig mit einer Riffelung 3a, wie Rändel, Kordel oder dergleichen ausgestattet; ebenso läßt sich das Abstandshalterohr 2 im Einpressbereich mit einer derartigen Riffelung 2a ausstatten, so daß entweder beide zusammenpressbaren Teile 2,3 oder aber nur eines eine rauhe Verankerungsfläche 2a, 3a haben bzw. hat.

Um das Einpressen der Gewindebuchsen 3 zu erleichtern, kann diese an ihrem in Einpressrichtung vorderen Ende mit einer schrägen und/oder bogenförmigen Einführfläche 3b ausgestattet sein.

Der Gewindebolzen 5 ist auf seiner gesamten Länge mit einem Außengewinde versehen und hat eine Mindestlänge, die es erlaubt, zwei Abstandshalterohre 2 mit ihren Gewindebuchsen 3 aufzuschrauben, wobei zwischen den beiden Abstandshalterohren 2 eine Platte 1 verspannt werden kann. Dieser Gewindebolzen 5 ist in seiner Einschraubtiefe in das Abstandshalterohr 2 hinein stufenlos einstellbar.

Die Kragenbuchse 6 ist mit einer axial durchgehenden Gewindebohrung 1o ausgestattet, mit der sie auf den Gewindebolzen 5 aufschraubbar ist. Diese Kragenbuchse 6 faßt in das Abstandshalterohr 2 mit geringem Spiel ein und weist einen endseitigen, über die Buchse 6 verbreiterten Kragen 6a auf, der eine Anlagefläche bildet.

Der in der Grundform kreisförmige Kragen 6a läßt sich von einer Abdeckkappe 9 überdecken, die auf den Kragen 6a aufgepresst oder aufgesteckt und mit diesem verklebt wird. Es ist bevorzugt, die Abdeckkappe 9 auf den Kragen 6a durch Pressverbindung festzulegen, wobei der Kragen 6a mantelseitig mit einer Riffelung 6b ausgestattet sein kann. Weiterhin läßt sich in der Stirnfläche des Kragens 6a ein Schlitz 11 für das Einsetzen eines Werkzeuges, wie Schraubendreher, einer Münze oder der gleichen zum Verdrehen der Kragenbuchse 6 aussparen.

Der Außendurchmesser des Kragens 6a ist um die Wandstärke der ihn übergreifenden Abdeckkappe 9 kleiner als der Außendurchmesser des Abstandshalterohres 2 ausgeführt, so daß im verbundenen Zustand der Kragen 6a mit Abdeckkappe 9 den gleichen Durchmesser wie das Abstandshalterohr 2 zeigt.

Die Kragenbuchse 6 und die Abdeckkappe 9 sind ebenfalls aus Aluminium hergestellt.

Die Platten 1 des Regales sind vorzugsweise von Gasplatten gebildet; sie können jedoch auch aus Holz, Kunststoff oder dergleichen bestehen. Weiterhin ist die Grundform und Größe der Platten 1 verschiedenartig ausführbar.

Bei der Verbindung zweier übereinander angeordneter Platten 1 gemäß Fig. 3 wird zunächst in das untere Abstandshalterohr 2 der Gewindebolzen 5 eingeschraubt (in deren Gewindebohrung 13) und dann auf diesen Gewindebolzen 5 eine formschlüssig in das Abstandshalterohr 2 einfassende Führungsbuchse 8 aufsteckt, die teilweise in das Abstandshalterohr 2 hineingreift und teilweise aus diesem herausragt. Nunmehr wird um diese Führungsbuchse 8 eine Zwischenscheibe 7 auf die Stirnfläche 4 des Abstandshalterohres 2 gelegt und dann die Platte 1 mit ihrer Bohrung 12 auf die Führungsbuchse 8 aufgesteckt, so daß die Platte 1 dann auf der Zwischenscheibe 7 aufliegt. Die Bohrung 12 der Platte 1 ist etwas größer als der Außendurchmesser der Führungsbuchse 8 und auch der Kragenbuchsen 6 ausgebildet, so daß die Platte 1 mit Spiel um die Führungsbuchse 8 greift.

Die Führungsbuchse 8 ragt nach oben aus der Platte 1 heraus und nunmehr wird eine zweite Zwischenscheibe 7 auf die Führungsbuchse 8 aufgesteckt, die sich dann auf die Platte 1 auflegt. Anschließend wird das zweite (obere) Abstandshalterohr 2 auf die Führungsbuchse 8 aufgesteckt und dann mit seiner Gewindebuchse 3 auf den Gewindebolzen 5 aufgeschraubt und zwar von Hand. Beim Anziehen dieses Abstandshalterohres 2 erfolgt ein Verspannen der Platte 1 zwischen den beiden Rohr-Stirnflächen 4 unter Zwischenlage der Scheiben 7, so daß keine Metall-Glas-Anlage, jedoch ein feste Verbindung entsteht. Anschließend kann auf das obere Abstandshalterohr 2 die gleiche Plattenanordnung und Verbindung erfolgen usw. je nach Anzahl der übereinander anzuordnenden Platten 1.

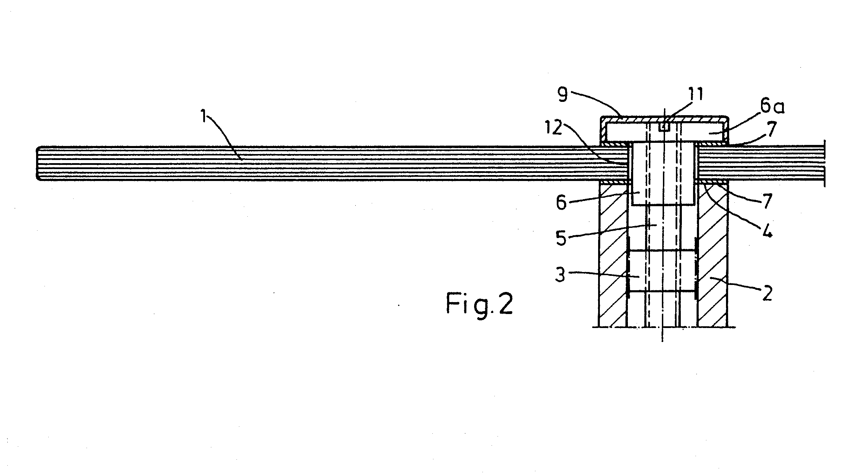

Die Befestigung der obersten Platte 1 eines Regales ist in Fig. 2 gezeigt. Hierbei ist der Gewindebolzen 5 soweit in das Abstandshalterohr 2 hineingeschraubt worden, daß er nur um die Stärke der Platte 1 mit zwei Zwischenscheiben 7 und der Höhe des Kragens 6a der Kragenbuchse 6 aus dem Abstandshalterohr 2 herausragt.

In der Bohrung 12 der mit einer Zwischenscheibe 7 auf der Stirnfläche 4 des Abstandshalterohres 2 aufliegende Platte 1 wird die Kragenbuchse 6 eingesteckt und mit ihrem Innengewinde 1o auf den Gewindebolzen 5 aufgeschraubt und verdreht, so daß der Kragen 6a unter Zwischenschaltung einer Zwischenscheibe 7 gegen die Platte 1 drückt und eine verspannte Plattenbefestigung zwischen Kragen 6a und Stirnfläche 4 des Abstandshalterohres 2 erfolgt. Danach wird auf den Kragen 6a die Abdeckkappe 9 aufgedrückt, so daß obenseitig ein glatter Kopfabschluß besteht.

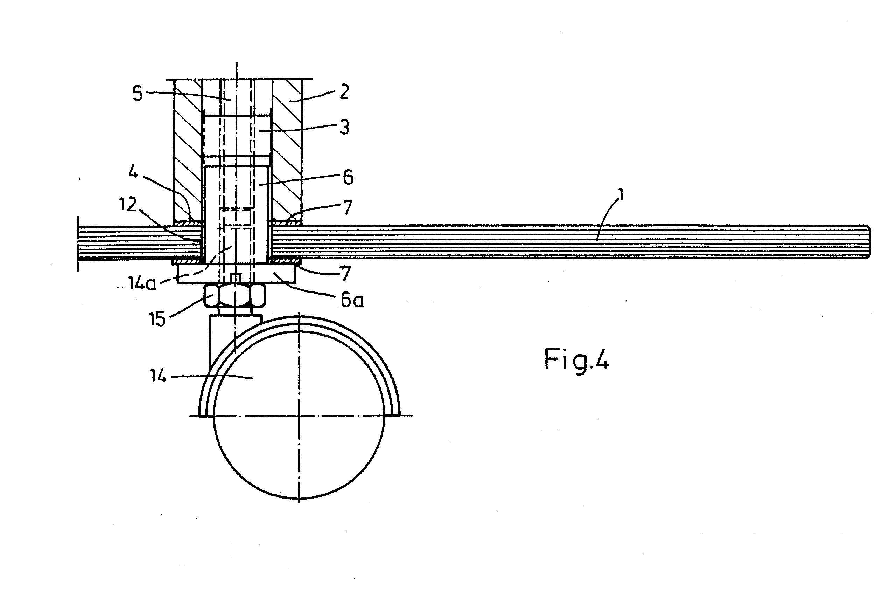

Die Befestigung der untersten Platte 1 eines Regales ist in Fig. 4 gezeigt. Hierbei wird die Kragenbuchse 6 von unten her durch die Bohrung 12 der Platte 1 gesteckt und dann die Kragenbuchse 6 auf den nach unten aus dem Abstandshalterohr 2 herausragenden oder bündig zur unteren Abstandshalterohr-Stirnfläche 4 endenden oder gegenüber dieser Stirnfläche 4 zurückversetzten Gewindebolzen 5 aufgeschraubt, wodurch die Platte 1 nach oben gegen die Stirnfläche 4 des Abstandshalterohres 2 gezogen wird und zwischen Kragen 6a und Rohr-Stirnfläche 4 verspannt befestigt wird. Auch hierbei liegen zwischen Platte 1 und Kragen 6a sowie Rohr-Stirnfläche 4 je eine Zwischenscheibe 7.

Diese untere Kragenbuchse 6 ist in bevorzugter Weise länger als die obenseitig anzuordnende Kragenbuchse 6 ausgeführt, um in dieser unteren Kragenbuchse 6 nocht einen Fuß 16, eine Laufrolle 14 oder dergleichen befestigen zu können, wobei der Fuß 16 bzw. die Laufrolle 14 dann mit einem Gewindebolzen 14a in die Gewindebohrung 1o der Kragenbuchse 6 eingeschraubt und durch eine Mutter 15 oder dergleichen in der eingeschraubten Stellung fixiert wird.

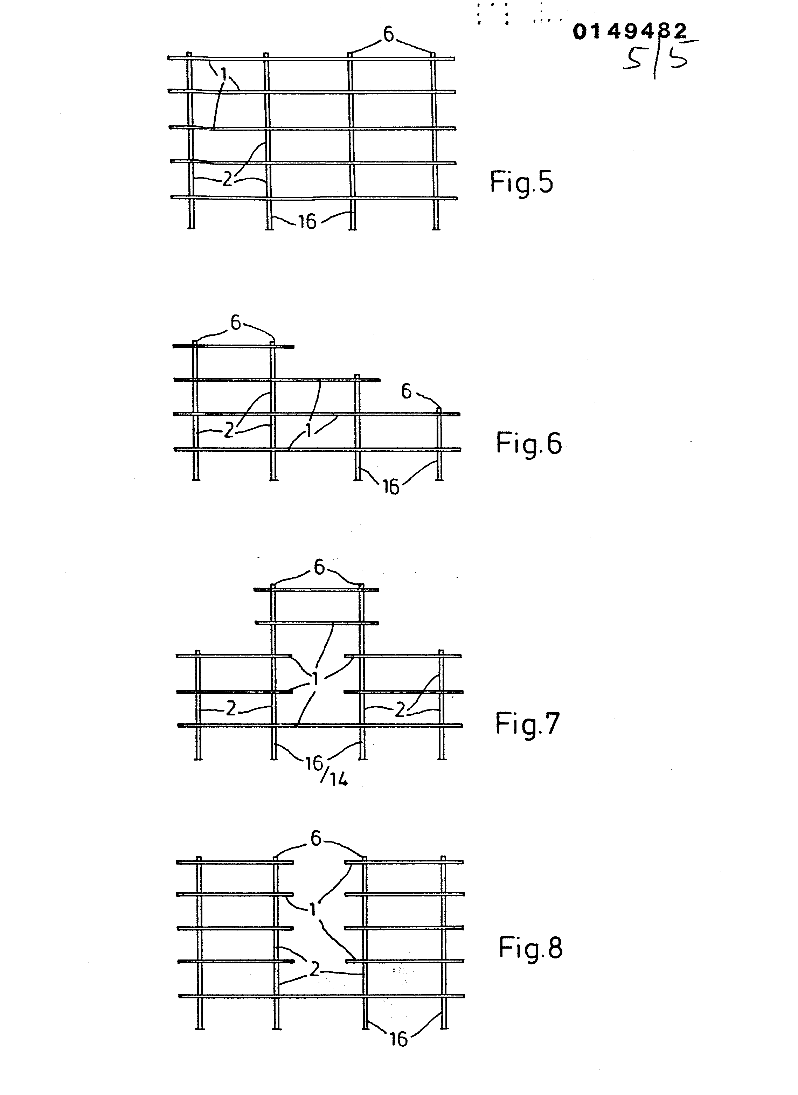

Der Fuß 16 kann dabei höheneinstellbar ausgebildet sein, so daß ein genaues Höheneinrichten des Regales möglich ist. Bei der Anordnung von Laufrollen 14 ist das Regal in günstiger Weise fahrbar ausgebildet. Die Anordnung der Platten 1 übereinander und auch nebeneinander läßt sich beliebig durchführen, wie in Fig. 5 bis 8 in verschiedenen Regalaufbauten dargestellt ist. Weiterhin läßt sich jedes Regal jederzeit im Aufbau ändern oder erweitern.

Die Regalfüße 16 lassen sich auch von Abstandshalterohren 2 bilden, die dann untenseitig mit ihrer Gewindebuchse 3 direkt auf den aus der untersten Platte 1 herausragenden Gewindebolzen 5 aufgeschraubt werden, so daß sie einerseits die Verspannung bewirken und andererseits die untere Kragenbuchse 6 entfallen kann.

Jede Platte 1 erhält zwischen zwei Abstandshalterohren 2 bzw. einem Abstandshalterohr 2 und einer Kragenbuchse 6 eine verspannte Festlegung, wodurch im gesamten Regal jede Platte einzeln fixiert ist, was eine sehr hohe Stabilität ergibt, auch noch dann im Regal, wenn eine oder einzelne Verbindungsbereiche nicht hundertprozentig angezogen sein sollten. Jede Platte 1 wird in bevorzugter Weise durch vier Verbindungsbeschläge mit der nächsten Platte 1 verbunden, wobei diese vorzugsweise in den Platten-, Eck- bzw. Randbereichen angeordnet werden.

Patentansprüche

1. Ablage- und Ausstellungmöbel, insbesondere Regal, mit mehreren im Abstand zueinander, vorzugsweise übereinander gehaltenen Aufnahmeflächen bildenden Platten, gekennzeichnet d u r c h mehrere jeweils zwei benachbarte Platten (1) gegeneinander lagefixierende Verbindungsbeschläge, von denen jeder Verbindungsbeschlag ein zwischen den benachbarten Platten (1) angeordnetes Abstandshalterohr (2) mit mindestens einer darin eingesetzten mutterartigen Gewindebuchse (3), einen in die Gewindebuchse (3) in Längsrichtung des Abstandshalterohres (2) eingeschraubten, an der einschraubseitigen Stirnfläche (4) des Abstandshalterohres (2) zugänglichen, im Abstandshalterohr (2) endenden oder aus diesem herausragenden Gewindebolzen (5) und ein auf den Gewindebolzen (5) aufgeschraubtes, die Platte (1) zwischen sich und der Abstandshalterohr-Stirnfläche (4) verspannendes, von einem zweiten Abstandshalterohr (2) oder einer Kragenbuchse (6) gebildetes Widerlager aufweist.

2. Ablage- und Ausstellungsmöbel nach Anspruch 1, dadurch gekennzeichnet, d a ß das Abstandshalterohr (2) von einem dickwandigen Aluminiumrohr mit kreisförmigem Querschnitt gebildet ist.

3. Ablage- und Ausstellungsmöbel nach Anspruch 1 und 2, dadurch gekennzeichnet, d a ß in beiden Längenendbereichen des Abstandshalterohres (2) jeweils eine Gewindebuchse (3) eingepresst ist, wobei jede Gewindebuchse (3) mit Abstand zur Rohr-Stirnfläche (4) in dem Abstandshalterohr (2) liegt und die Gewindebuchse (3) und/oder das Abstandshalterohr (2) zur Erzielung eines festen Press-Sitzes mit Riffelungen (3a,2a) ausgestattet ist.

4. Ablage- und Ausstellungsmöbel nach Anspruch 1, dadurch gekennzeichnet, d a ß der Gewindebolzen (5) auf seiner gesamten Länge mit einem Außengewinde versehen und in seiner aus dem Abstandshalterohr (2) herausragenden Länge stufenlos in die Gewindebuchse (3) eingeschraubt ist.

5. Ablage- und Ausstellungsmöbel nach Anspruch 1, dadurch gekennzeichnet, d a ß die Kragenbuchse (6) in das Abstandshalterohr (2) einfaßt und außerhalb des Abstandshalterohres (2) einen in der Grundform kreisförmigen Kragen (6a) aufweist, auf dem eine Abdeckkappe (9) durch Kleben oder Pressen festgelegt ist.

6. Ablage- und Ausstellungsmöbel nach Anspruch 5, dadurch gekennzeichnet, d a ß der Kragen (6a) der Kragenbuchse (6) einen Durchmesser aufweist, der um die Wandstärke der topfartigen Abdeckkappe (9) kleiner als der Außendurchmesser des Abstandshalterohres (2) ist und daß der Kragen (6a) mantelseitig mit einer Riffelung (6b) und stirnseitig mit einem Werkzeug-Aufnahmeschlitz (11) ausgestattet ist.

7. Ablage- und Ausstellungsmöbel nach Anspruch 1, 5 und 6, dadurch gekennzeichnet, d a ß die Kragenbuchse (6) einteilig aus Aluminium und die Abdeckkappe (9) aus Aluminium bestehen.

8. Ablage- und Ausstellungsmöbel nach Anspruch 1, dadurch gekennzeichnet, d a ß zwischen Stirnfläche (4) des Abstandshalterohres (2) und der Platte (1) sowie der Platte (1) und dem Kragen (6a) der Kragenbuchse (6) jeweils eine Zwischenscheibe (7) aus einem flexiblen und/oder elastischen Werkstoff, wie Kunststoff, angeordnet ist.

9. Ablage- und Ausstellungsmöbel nach den Ansprüchen 1 bis 8, dadurch gekennzeichnet, d a ß die oberste Platte (1) unter Zwischenlage der Zwischenscheibe (7) auf der Stirnfläche (4) des Abstandshalterohres (2) aufliegt und die Kragenbuchse (6) durch eine Bohrung (12) der Platte (1) faßt und auf den durch die Plattenbohrung (12) fassenden Gewindebolzen (5) aufgeschraubt ist, wobei zwischen Kragen (6a) und Platte (1) eine von der Kragenbuchse (6) durchfaßte Zwischenscheibe (7) angeordnet und auf den Kragen (6a) die Abdeckkappe (9) aufgesetzt ist (Fig. 2).

10.    Ablage- und Ausstellungsmöbel nach den Ansprüchen 1 bis 8, dadurch gekennzeichnet, d a ß die unterste Platte (1) unter Zwischenlage einer Zwischenscheibe (7) unter der Stirnfläche (4) des Abstandshalterohres (2) anliegt und die Kragenbuchse (6) durch eine Bohrung (12) der Platte (1) faßt und auf den Gewindebolzen (5) aufgeschraubt ist, wobei zwischen Kragen (6a) und Platte (1) eine von der Kragenbuchse (6) durchfaßte Zwischenscheibe (7) angeordnet ist, und d a ß in das Innengewinde (1o) der Kragenbuchse (6) eine höheneinstellbare Laufrolle (14) oder ein hoheneinstellbarer Standfuß (16) oder ein einen Standfuß (16) bildenes Abstandshalterohr (2) eingeschraubt ist (Fig. 4 und 5 bis 8).

11.    Ablage- und Ausstellungsmöbel nach den Ansprüchen 1 bis 8, dadurch gekennzeichnet, d a ß jede mittlere Platte (1) unter Zwischenschaltung von beidseitigen Zwischenscheiben (7) zwischen zwei auf einen gemeinsamen Gewindebolzen (5) aufgeschraubten Abstandshalterohren (2) verspannt gehalten ist, wobei um den durch die Plattenbohrung (12) sich erstreckenden Gewindebolzen (5) eine in beide Abstandshalterohre (2) einfassende und in der Plattenbohrung (12) lagernde Führungsbuchse (8) aus Kunststoff oder dergleichen angeordnet ist (Fig. 3).

12.    Ablage- und Ausstellungsmöbel nach den Ansprüchen 1 bis 11, dadurch gekennzeichnet, d a ß die Platten (1) aus Glas, Holz oder Kunststoff bestehen und eine rechteckige, quadratische trapezförmige, eckige und eckseitig abgerundete Grundform haben.

13.    Ablage- und Ausstellungsmöbel nach den Ansprüchen 1 bis 12, dadurch gekennzeichnet, d a ß die Kragenbuchse (6) für die Verbindung der untersten Platte (1) und Aufnahme der Laufrolle (14) bzw. des Fußes (16) länger als die Kragenbuchse (6) für die oberste Platte (1) ausgebildet ist.

Fig.1

Fig.2

315

0149482

Fig.3

Fig.4

Fig.5

Fig.6

Fig.7

Fig.8